# DEMANDE DE BREVET EUROPEEN

(11) **EP 2 230 510 A1**
(43) Date de publication de la demande: **22.09.2010**
(21) Numéro de dépôt: 10290112.1
(22) Date de dépôt: 08.03.2010
(51) Int. Cl.: G01N 27/414

(54) **Détection et quantification électrique de derives mercuriques**

(30) Priorité: 18.03.2009 FR 0901252
(71) Demandeur: Commissariat à l'Énergie Atomique et aux Énergies Alternatives, 75015 Paris (FR)
(72) Inventeur: Carella, Alexandre, 64110 Mazeres Lezons (FR); Simonato, Jean-Pierre, 38360 Sassenage (FR)
(74) Mandataire: Noel, Chantal Odile

(57) **Abrégé**

L'invention se rapporte à un appareil et à un procédé de détection et/ou de quantification des ions mercuriques Hg²⁺.

L'appareil de l'invention est du type comprenant un dispositif électrique comprenant deux électrodes et un substrat comprenant au moins une surface en un matériau semi-conducteur organique ou inorganique, les électrodes étant en contact électrique avec le matériau semi-conducteur organique ou inorganique, et un dispositif de mesure de la variation du courant de conduction entre les deux électrodes, et en ce qu'au moins un composé complexant les ions mercuriques Hg²⁺, choisi parmi un composé dithia dioxa-monoazaether couronne, une N,N'(hydroxyéthyl) amine, une N,N'(carboxyléthyl) amine et les mélanges de deux au moins de ces composés, est lié au matériau semi-conducteur ou à une électrode du dispositif électrique.

L'invention trouve application dans le domaine de la détection des ions mercuriques, en particulier.

## Description

L'invention se rapporte à un appareil et à un procédé de détection et de quantification des ions mercuriques Hg²⁺.

Il est bien connu que le mercure est un composé toxique et/ou écotoxique sous toutes ses formes organiques et pour tous ses états chimiques.

En effet, le mercure s'accumule dans les organismes et est la cause de nombreuses maladies touchant spécialement les reins, le système digestif et le système neurologique.

De tous les degrés d'oxydation, ce sont les ions de mercure II, Hg²⁺, qui sont les plus toxiques.

La mise au point de capteurs sélectifs à cet élément est d'un intérêt particulier pour le dosage et la détection de cet élément dans le milieu naturel, l'eau et les aliments.

De plus, la détermination de la concentration en mercure dans les eaux destinées à l'alimentation est nécessaire dans le cadre des réglementations sur les eaux potables et sur les matières dangereuses.

La méthode couramment utilisée actuellement pour doser le mercure dans les eaux est la spectroscopie d'absorption atomique.

Cette méthode, bien que précise et fiable, a certains inconvénients.

En particulier, elle nécessite un équipement lourd difficilement transportable.

Les composés mercuriques peuvent également être détectés grâce à des capteurs colorimétriques et fluorescents sélectifs en greffant des chromophores ou des fluorophores sur des composés dithia dioxa-monoazaether couronnes.

Les composés dithia dioxa-monoazaether couronnes complexent sélectivement les ions Hg²⁺ et cette complexation entraîne une modification des propriétés des chromophores ou des fluorophores qui leurs sont liés.

Cette modification des propriétés optiques des chromophores ou des fluorophores est due à un effet électroattracteur du mercure qui appauvrit le chromophore.

Ainsi, Zhu et al. propose dans Org. Lett., 2008, 10, 1481-1484, un capteur chimique des ions mercuriques Hg²⁺ dans lequel un composé dithia dioxa-monoazaether couronne sur lequel est greffé un colorant tricarbocyanine est utilisé pour complexer les ions Hg²⁺ et ainsi provoque un changement de couleur du colorant lors de la complexation des ions Hg²⁺ par l'éther couronne.

Ce changement de couleur est visible à l'oeil nu.

Cependant, cette méthode ne permet pas la détection de faibles quantités d'ions Hg²⁺ et de plus ne permet pas de déterminer la concentration de Hg²⁺ dans l'échantillon analysé.

Dans ce même document, il est indiqué que la détection des ions mercuriques Hg²⁺ peut également être effectuée par analyse de la fluorescence émise par le colorant greffé sur l'éther couronne.

Cette méthode présente, outre l'impossibilité de déterminer la concentration en ions Hg²⁺, l'inconvénient de devoir être mise en oeuvre dans des conditions de luminosité réduite, ce qui ne lui permet pas d'être mise en oeuvre directement sur le site.

Le brevet US 7,385,267 B2 décrit des dispositifs électriques dans lesquels des nanotubes ou des nanofils, d'un matériau conducteur, fonctionnalisés par une molécule qui change de propriété au contact d'un analyte à détecter dans un échantillon.

Ce dispositif permet de détecter l'analyte dans l'échantillon par détection du changement de propriété du matériau conducteur.

Aucune référence n'est faite dans ce document à la détection d'ions Hg²⁺ et à la modification des propriétés de conduction d'un matériau semi-conducteur auquel est greffé un composé complexant des ions mercuriques Hg²⁺ lors de son contact avec les ions Hg²⁺.

Ainsi, il existe un besoin pour un appareil de détection et/ou de quantification des ions Hg²⁺ présents sous forme gazeuse ou en solution dans l'eau ou dans un solvant inconnu qui puisse être utilisé sur le site, quelque soit les conditions de luminosité, et qui puisse être transportable.

A cet effet, l'invention propose un appareil de détection et/ou de quantification des ions mercuriques Hg²⁺ du type comprenant :
- un dispositif électrique comprenant deux électrodes et un substrat comprenant au moins une surface en un matériau semi-conducteur organique ou inorganique, les électrodes étant en contact électrique avec le matériau semi-conducteur organique ou inorganique, et
- un dispositif de mesure de la variation du courant de conduction entre les deux électrodes,
**caractérisé en ce qu**'au moins composé complexant les ions mercuriques Hg²⁺, choisi parmi un composé dithia dioxa-monoazaether couronne, une N,N'(hydroxyéthyl) amine, une N,N'(carboxyléthyl) amine et les mélanges de deux au moins de ces composés, est greffé au matériau semi-conducteur ou à une électrode du dispositif électrique.

Dans un premier mode de réalisation de l'appareil de détection et/ou de quantification des ions mercuriques Hg²⁺ de l'invention, le substrat du dispositif électrique est entièrement constitué d'un matériau semi-conducteur organique ou inorganique.

Dans un second mode de réalisation plus particulièrement préféré de l'appareil de détection et/ou de quantification des ions mercuriques Hg²⁺ selon l'invention, le substrat du dispositif électrique comprend un support en silice (SiO₂) recouvert d'un matériau semi-conducteur.

De préférence, le matériau semi-conducteur du substrat du dispositif est choisi parmi un matériau à base de carbone, de silicium, de germanium, de zinc, de gallium, d'indium, de cadmium, ou de mélanges de deux au moins de ceux-ci.

Par matériau à base de carbone, de silicium, de germanium, de zinc, de gallium, d'indium, de cadmium, ou de mélanges de deux au moins de ceux-ci, on entend un matériau contenant au moins 20 % en moles de carbone, de silicium etc..., par rapport au nombre total de moles de composés du matériau.

Plus préférablement, le matériau semi-conducteur du substrat du dispositif électrique de l'invention est choisi parmi les nanofils et/ou les nanotubes de carbone, de silicium, de germanium, d'alliages de silicium et de germanium, et les mélanges de tels nanofils et/ou nanotubes.

Mais le matériau semi-conducteur du substrat du dispositif électrique peut également être un matériau organique choisi parmi un matériau à base de thiophène tel que le quaterthiophène et ses dérivés tels que le P3HT (poly-3-hexylthiophène) ; de pyrrole tel que le polypyrrole ; d'une arylamine telle que la triphénylamine et ses dérivés tels que les poly(triarylamine) ; de macrocycles hétérocycliques tels que les porphyrines et la tétraphénylporphyrine et les phtalocyanines et leurs dérivés tels que la tétraphénylporphyrine de cuivre et la phatocyanine de nickel ; d'acènes polycycliques aromatiques tels que le pentacène et leurs dérivés tels que le tri-isopropylsilyl-pentacène, d'arylènes tels que le pyrène et leurs dérivés tels que le dicyanopérylènediimide (PDI-CN₂).

De préférence, lorsque le matériau semi-conducteur du substrat du dispositif électrique est un matériau organique, il est de préférence choisi parmi le P3HT(poly-3-hexylthiophène), les poly(triarylamine), l'anthracène, le pentacène, le perylène, le polyparaphénylène, le polyparaphénylènevinylène, le polyfluorène, et leurs mélanges.

Quant aux électrodes du dispositif électrique, dans un mode de réalisation préféré, l'une d'entre elles est en un matériau semi-conducteur choisi parmi des nanotubes de carbone et du poly(3,4-éthylène dioxythiophène)/poly(styrène sulfonate).

Mais, dans un mode de réalisation particulièrement préféré de l'invention, le substrat est constitué d'un support en silice recouvert d'une couche de silicium dans laquelle sont gravés des nanofils de silicium.

Dans un mode de réalisation également préféré de l'appareil de détection et/ou de quantification des ions mercuriques Hg²⁺ selon l'invention, le au moins un composé complexant les ions mercuriques Hg²⁺ est greffé à l'une des électrodes du dispositif électrique.

Dans un mode de réalisation particulier de l'appareil de détection et/ou de quantification des ions mercuriques Hg²⁺ de l'invention, le matériau semi-conducteur du substrat du dispositif électrique est en silicium et le au moins un composé complexant les ions mercuriques Hg²⁺ est greffé à ce matériau semi-conducteur par un groupement de greffage choisi parmi un groupement alcyne, un groupement alcène, un groupement diazonium ou un groupement triazène.

Dans un autre mode de réalisation particulier de l'appareil de détection et/ou de quantification des ions mercuriques Hg²⁺ selon l'invention, le matériau semi-conducteur du substrat du dispositif électrique est en silicium recouvert d'une fine couche d'oxyde et le au moins un composé complexant les ions mercuriques Hg²⁺ est greffé à ce matériau semi-conducteur par un groupement de greffage et un groupement silane, de préférence un groupement trialcoxysilane ou un groupement trihalogénosilane, plus préférablement, un groupement triméthoxysilane ou un groupement trichlorosilane.

Dans encore un autre mode de réalisation particulier de l'appareil de détection et/ou de quantification des ions mercuriques Hg²⁺ selon l'invention, le matériau semi-conducteur du substrat du dispositif électrique est constitué de nanofils et/ou nanotubes de carbone et le composé complexant les ions mercuriques Hg²⁺ est greffé à ces nanotubes et/ou nanofils de carbone par un groupement de greffage choisi parmi un groupement diazonium, un groupement triazène, un groupement précurseur radicalaire, un groupement aromatique ou hétéroaromatique tel qu'un groupement pyrène, anthracène ou porphyrine, ou un groupement amine, ou un groupement alcool.

Toujours selon un mode de réalisation particulier de l'appareil de détection et/ou de quantification des ions mercuriques Hg²⁺ selon l'invention, une électrode du dispositif électrique est en or et le composé complexant les ions mercuriques Hg²⁺ est greffé à cette électrode par un groupement de greffage choisi parmi un groupement organique soufré, de préférence un groupement thiol, un groupement thiol protégé tel qu'un groupement thio acétate, ou un groupement disulfure.

Dans tous les modes de réalisation de l'appareil de détection et/ou de quantification des ions mercuriques Hg²⁺ de l'invention, le au moins un composé complexant les ions mercuriques Hg²⁺ est le dithia dioxa-monoazaether couronne.

L'invention propose également un procédé de détection et/ou de quantification des ions mercuriques Hg²⁺ qui comprend une étape de mise en contact de l'échantillon susceptible de contenir des ions mercuriques Hg²⁺ avec le au moins un composé complexant les ions mercuriques Hg²⁺ de l'appareil de détection et/ou de quantification des ions mercuriques Hg²⁺ selon l'invention et une étape de lecture de la variation du courant de conduction mesuré par le dispositif de mesure de l'appareil de détection et/ou de quantification des ions mercuriques Hg²⁺ de l'invention.

L'invention sera mieux comprise et d'autres caractéristiques et avantages de celle-ci apparaîtront plus clairement à la lecture de la description explicative qui suit.

L'invention est basée sur la découverte que la complexation des ions mercuriques Hg²⁺ par un composé complexant le mercure, greffé sur un matériau semi-conducteur, modifie de façon drastique l'environnement électrostatique du matériau semi-conducteur, entraînant un changement de ses propriétés de conduction, rendant ainsi possible la détection et/ou la quantification, électriquement, des ions Hg²⁺ par des transistors ou des résistances fonctionnalisés avec le composé complexant le mercure.

Le composé complexant les ions mercuriques Hg²⁺ comprend donc en tant qu'entité principale un groupement complexant les ions mercuriques Hg²⁺ choisi parmi un composé dithia dioxa-monoazaether couronne, une N,N'(hydroxyéthyl) amine, une N,N'(carboxyléthyl) amine et les mélanges de ceux-ci.

Ce groupement a une très grande sélectivité pour les ions mercuriques Hg²⁺.

Le composé complexant les ions mercuriques Hg²⁺ est lié, par un groupement de greffage, à une partie d'un dispositif électrique qui peut être un dispositif de type purement résistif ou du type de transistor à effet de champ, ce qui permet d'obtenir un dispositif aisément transportable.

Ce type de dispositifs comprennent, essentiellement, un substrat comprenant au moins une partie en un matériau semi-conducteur et deux électrodes placées en contact électrique avec le matériau semi-conducteur, pour mesurer la variation du courant de conduction entre ces deux électrodes lorsque le composé complexant les ions mercuriques Hg²⁺ est mise en contact avec des ions mercuriques Hg²⁺.

La partie du dispositif électrique à laquelle le composé complexant les ions mercuriques Hg²⁺ est lié peut être une des électrodes ou la partie en matériau semi-conducteur du substrat du dispositif électrique de l'appareil de détection et/ou de quantification des ions mercuriques Hg²⁺ de l'invention.

Le composé complexant les ions mercuriques Hg²⁺ peut être lié, au matériau semi-conducteur ou à une des électrodes, par l'intermédiaire d'un groupement de greffage ou encore par liaison covalente ou par interaction faible stabilisante, selon le matériau semi-conducteur, ou le matériau de l'électrode.

Cependant, dans l'invention on utilise une liaison par greffage du composé complexant les ions mercuriques Hg²⁺ car ce type de liaison est pérenne dans le temps et confère à l'appareil de l'invention une grande durée de vie et une reproductibilité et sensibilité améliorées.

Dans le cas où le composé complexant les ions mercuriques Hg²⁺ est lié par greffage soit au matériau semi-conducteur du substrat du dispositif électrique, soit à l'électrode, le composé complexant les ions mercuriques Hg²⁺ comprend, outre l'entité complexant les ions mercuriques Hg²⁺ citée ci-dessus, un groupement de greffage sélectionné parmi un groupement hydrocarbure aromatique monocyclique ou polycyclique, saturé ou insaturé, tel que le pyrène, un groupement alcène de type vinylique, un groupement alcyne, tel qu'un groupement acétylénique, un groupement silane, par exemple un groupement trihalogénosilane tel qu'un groupement trichlorosilane ou trialcoxysilane, de préférence un groupement triméthoxysilane, un groupement diazoïque, un groupement azoture, un précurseur radicalaire tel qu'un groupement diazonium, un groupement isocyanate, un groupement organométallique tel que par exemple un groupement organolithien tel que le phényllithium, ou organomagnésien ou organozincique, un groupement soufré tel qu'un groupement thiol ou disulfure, un groupement acide carboxylique ou acide sulfonique ou acide phosphorique et leurs dérivés esters tels que le carboxylate de méthyle, un groupement alcool, un groupement phénol, un groupement amine, un groupement amide, un groupement halogénure tel qu'un groupement iodure.

Par les termes « groupement du type X » on désigne, dans l'invention, un groupement comprenant un groupement chimique ou un élément chimique X.

Le groupement de greffage peut plus particulièrement être un groupement éthynylphényle, vinylphényle, diazophényle ou pyrène.

Plus précisément, lorsque le matériau semi-conducteur est le silicium, le groupement de greffage peut être un groupement alcyne, un groupement alcène, un groupement diazonium ou un groupement triazène.

Comme le silicium est facilement oxydable en surface, lorsque le matériau semi-conducteur est du silicium recouvert d'une fine couche d'oxyde tel que de l'oxyde natif par exemple, le groupement de greffage est de préférence un groupement silane tel qu'un groupement trialcoxysilane, par exemple un groupement triméthoxysilane ou un groupement trihalogenosilane, tel que par exemple un groupement trichlorosilane, ou tout autre espèce se liant à la surface de l'oxyde.

Le matériau semi-conducteur peut être tout matériau semi-conducteur qui apparaîtra à l'homme de l'art.

De préférence, il s'agira d'un matériau en ou à base de carbone, de silicium, de germanium, de zinc, de gallium, d'indium, de cadmium, ou de mélanges de ceux-ci.

Comme on l'a déjà dit, par « matériau à base de X », on désigne dans l'invention un matériau comprenant au moins 20 % en moles de X par rapport au nombre total de moles présentes dans le matériau.

Le matériau semi-conducteur pourra être également un matériau semi-conducteur organique tel que des oligomères, des polymères ou des petites molécules d'un poids moléculaire en masse inférieur à 1000 g.mol⁻¹, tel que le pentacène.

Par exemple, les matériaux semi-conducteurs organiques peuvent encore être des matériaux à base de composés aromatiques hétérocycliques tels que le thiophène et le quaterthiophène et leurs dérivés tels que les P3HT (poly-3-hexylthiophènes) ; le pyrrole tel que le polypyrrole ; une arylamine telle que la triphénylamine et ses dérivés tels que les poly(triarylamine) ; de macrocycles hétérocycliques tels que les porphyrines telles que la tétraphénylporphyrine et les phtalocyanines et leurs dérivés tels que la tétraphénylporphyrine de cuivre et la phtalocyanine de nickel ; des acènes polycycliques aromatiques tels que les pentacènes et leurs dérivés tels que le tri-isopropylsilyl-pentacène ; des arylènes tels que le pyrène, et ses dérivés tels que le dicyanopérylènediimide (PDI-CN₂).

Des exemples de tels matériaux semi-conducteurs organiques préférés sont le poly-3-hexylthiophène, les poly(triarylamine), l'anthracène, le pentacène, le pérylène, le polyparaphénylène, le polyparaphénylènevinylène et le polyfluorène.

Cependant, le matériau semi-conducteur tout particulièrement préféré est constitué de nanofils et/ou de nanotubes de silicium et/ou de nanofils et/ou de nanotubes de carbone et/ou de nanofils et/ou de nanotubes d'un matériau à base de silicium et de germanium tel qu'un alliage de composition molaire Si_{0,7}Ge_{0,3} ou un super-réseau Si/ alliage de composition molaire Si_{0,1}Ge_{0,9}.

Par "super réseau" on entend un nanofil ou un nanotube composé, dans le sens de sa plus grande dimension, de la répétition d'un motif élémentaire composé de l'alternance d'une couche de Si et d'une couche en un alliage de Si et de Ge, ici comprenant 10 % de silicium en moles, par rapport au nombre total de moles de Si et de Ge.

Le plus préférablement, le matériau semi-conducteur est constitué de nanofils de silicium gravés, dans une couche de silicium sur la surface d'un matériau isolant.

Ce type de matériau est communément appelé SOI pour « silicon on insulator ».

Le matériau semi-conducteur décrit dans le cas ci-dessus est le matériau semi-conducteur qui constitue le substrat du dispositif électrique dont un changement des propriétés de conduction est provoqué par la complexation des ions Hg²⁺ par le composé complexant les ions mercuriques Hg²⁺.

Pour pouvoir mesurer les propriétés de conduction due à la complexation des ions Hg²⁺ par le composé complexant des ions mercuriques Hg²⁺, des électrodes sont placées sur le substrat en un matériau semi-conducteur tel que défini ci-dessus.

Les électrodes peuvent être des électrodes métalliques, par exemple en or, en argent, en palladium, en platine, en titane, en silicium dopé, en cuivre ou en nickel.

Mais les électrodes peuvent également être en un matériau semi-conducteur tel que des nanotubes et/ou nanofils de carbone ou en poly(3,4-éthylène dioxythiophène)/poly(styrène sulfonate) qui est un polymère semi-conducteur.

Le composé complexant les ions mercuriques Hg²⁺ peut également être lié à l'une des électrodes.

Il est de préférence lié, comme dans le cas du substrat semi-conducteur, par greffage sur le matériau constituant l'électrode, auquel cas le composé complexant les ions mercuriques Hg²⁺ comprendra également un groupement de greffage tel que décrit pour le matériau semi-conducteur.

Le greffage du composé complexant les ions mercuriques Hg²⁺ par le groupement de greffage peut être réalisé en une ou plusieurs étapes.

Il est par exemple possible de faire réagir la surface du matériau semi-conducteur avec une première molécule, et de faire ensuite réagir une fonction de cette molécule greffée avec une seconde molécule organique comprenant le composé complexant les ions mercuriques Hg²⁺.

Par exemple, le silicium ou son oxyde natif pourront être fonctionnalisés par une première série de molécules organiques comportant des fonctions terminales sur lesquelles la molécule complexant les ions mercure est greffé dans un second temps par des techniques classique de la synthèse organique, organométallique ou inorganique.

Des assemblages par liaison covalente ou par interaction faible sont possibles.

Par exemple, un assemblage par liaison pi-pi (recouvrement orbitalaire stabilisant) est envisageable, de préférence lorsque le matériau semi-conducteur est constitué de nanotubes et/ou de nanofils de carbone.

Toujours dans le cas où un ou des nanotubes et/ou nanofils de carbone sont utilisés comme matériaux semi-conducteurs, le groupement de greffage peut être un groupement triazène, un groupement précurseur radicalaire, par exemple un groupement diazonium, ou toute molécule susceptible de former des liaisons covalentes avec les atomes de carbone, un groupement aromatique ou hétéroaromatique tel qu'un groupement pyrène, anthracène ou porphyrine ou un groupement dérivé de la famille des amines permettant une fonctionnalisation non covalente, c'est-à-dire supra-moléculaire, un groupement amine, ou un groupement alcool pour une réaction avec les groupement acides carboxyliques présents à la surface des nanotubes et/ou nanofils de carbone, éventuellement après une activation chimique, par exemple avec un agent de couplage, pour former des esters ou des amides.

Dans le cas d'un matériau semi-conducteur à base de germanium, le groupement de greffage peut être un alcyne ou un alcène.

Lorsque le matériau semi-conducteur est un arséniure de gallium et d'indium (InGaAs), le groupement de greffage peut être un groupement soufré, tel qu'un thiol.

Dans le cas d'un matériau semi-conducteur à base de sélénium et de cadmium (CdSe) ou de sulfure de cadmium (CdS), le groupement de greffage peut être un groupement amine ou soufré, tel qu'un thiol.

Si le matériau semi-conducteur est un oxyde de zinc, le groupement de greffage peut être un groupement acide carboxylique ou phosphorique.

Si le matériau semi-conducteur est un sulfure de zinc (ZnS), le groupement de greffage peut être un groupement soufré, par exemple un groupement thiol.

Dans le cas d'un matériau semi-conducteur organique, le composé complexant les ions mercuriques Hg²⁺ est intégré lors de la synthèse de ce matériau semi-conducteur organique.

Lorsque le composé complexant les ions mercuriques Hg²⁺ est lié à l'une des électrodes et que l'électrode est en or, de préférence, on utilisera pour cette liaison, un groupement organique soufré tel que par exemple un groupement thiol, un groupement thiol protégé tel qu'un groupement thioacétate, un groupement disulfure.

Avantageusement, le groupement de greffage du composé complexant les ions mercuriques Hg²⁺ comprend, outre le groupement de greffage, une partie espaceur, qui permet de moduler la distance entre le composé complexant les ions mercuriques Hg²⁺ et le matériau semi-conducteur du substrat ou des électrodes.

Cette partie espaceur peut être un groupe alkyle en C₁ à C₂₀ pouvant contenir un ou plusieurs hétéroatomes, tels que S, O et N, et/ou un radical aromatique, tel qu'un radical biphényl, ou un radical hétéroaromatique, tel qu'un radical thiophène.

Le dispositif selon l'invention est donc constitué :
- d'un dispositif électrique comprenant deux électrodes placées sur un substrat comprenant au moins une surface en un matériau semi-conducteur organique ou inorganique, et en contact avec ce matériau semi-conducteur, et
- d'un dispositif de mesure du courant de conduction entre les deux électrodes, un composé complexant le mercure choisi parmi un composé dithia dioxa-monoazaether couronne, une N,N'(hydroxyéthyl) amine, une N,N'(carboxyléthyl) amine et les mélanges de deux au moins de ces composés étant lié par greffage à une des parties en matériau semi-conducteur du dispositif électrique.

Cette structure simple permet une production à bas coûts et à grande échelle.

En outre, du fait de cette structure simple, l'appareil de détection et de quantification des ions mercuriques Hg²⁺ de l'invention peut être de très petite taille, nécessitant peu d'énergie pour fonctionner, ce qui favorise sa portabilité.

L'appareil de détection et/ou de quantification des ions mercuriques Hg²⁺ selon l'invention comprend, outre le dispositif électrique décrit ci-dessus, auquel est lié au moins un composé complexant les ions mercuriques Hg²⁺ choisi parmi un dithiadioxa-monoazaether couronne, une N,N'(hydroxyéthyl) amine, une N,N'(carboxyléthyl) amine ou des mélanges de ces composés, liés au substrat ou à l'une des électrodes, un dispositif de mesure de la variation du courant de conduction entre les électrodes du dispositif électrique.

L'appareil de détection et/ou de quantification des ions Hg²⁺ peut être étalonné de sorte que le courant de conduction circulant entre les deux électrodes du dispositif électrique, et mesuré par le dispositif de mesure, peut être relié directement à la concentration en ions Hg²⁺ présents dans l'échantillon à analyser.

Cet échantillon peut être un échantillon gazeux ou liquide, particulièrement un échantillon d'eau.

La structure simple de l'appareil de détection et/ou de quantification des ions Hg²⁺ de l'invention permet une production à bas coûts et à grande échelle d'un tel appareil.

En outre, du fait de cette structure simple, l'appareil de l'invention peut être de très petite taille, nécessitant peu d'énergie pour fonctionner, ce qui favorise sa portabilité.

Afin de mieux faire comprendre l'invention, on va en décrire à titre purement illustratif et non limitatif plusieurs exemples de mise en oeuvre.

**Exemple 1** : Capteur à base de transistors.

Des appareils de détection et de quantification des ions mercuriques Hg²⁺ ont été fabriqués sur du SOI (silicium sur isolant) où le matériau semi-conducteur est un nanofil de silicium gravé de 280 nm de large, 4µm de long et 16 nm d'épaisseur gravé sur une couche d'oxyde de silicium de 77 nm, de la façon suivante.

### 1. Synthèse du composé complexant les ions mercuriques Hg²⁺ avec son groupement de greffage :

le N-(4-éthynylphényl)-dithia dioxa-monoazaether couronne.

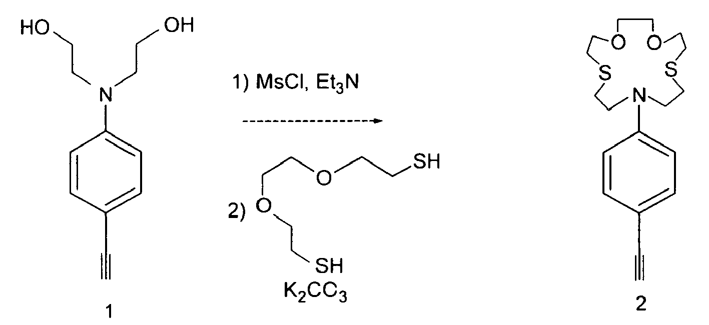

La N,N-di(2-hydroxyéthyl)-4-ethynylaniline (1) a été obtenue par la procédure de Fang et coll. (Huang J.-H., J. Org. Chem. 2005, 70, 5827-5832). 1 a été mis à réagir avec du chlorure de méthanesulfonyle. Le produit obtenu a été ensuite mis en présence de 3,6-dioxa-1,8-octanedithiol et de carbonate de potassium suivant la procédure décrite par Soto et coll. dans J. Am. Chem. Soc. 2003, 125, 3418-3419. Suivant cette méthode, 2 a été obtenu avec un rendement de 30 %.

### 2. Greffage du composé obtenu à l'étape ci-dessus sur le nanofil de silicium

Le composé 2 obtenu à l'étape ci-dessus est greffé sur le nanofil de silicium par hydrosilylation thermique. Le dispositif électrique est nettoyé à l'aide d'une solution piranha (mélange de 3 moles d'acide sulfurique concentré et de 1 mole de peroxyde d'hydrogène à 30 %) puis traité avec une solution de HF 1%. Le dispositif électrique activé est chauffé à reflux pendant 2 heures dans une solution à 0,5 mM du récepteur dans le mesitylène.

Le dispositif électrique est ensuite rincé au dichlorométhane.

### 3. Test de l'appareil de détection et/ou de quantification des ions mercuriques Hg²⁺ selon l'invention.

Le dispositif électrique obtenu à l'étape ci-dessus est trempé dans une solution contenant des ions Hg²⁺ à 1 mmol.l⁻¹ puis rincé à l'eau déionisée.

Il est ensuite séché à l'air pendant 5 minutes.

La complexation des ions Hg²⁺ entraîne la modification de la conductance du dispositif électrique.

Une variation relative de la conductance |Δg/g| supérieure à 10% mais inférieure à 20% a été mesurée.

Comme on le voit, l'appareil de détection et/ou de quantification des ions Hg²⁺ selon l'invention présente une très grande sélectivité pour les ions Hg²⁺, en raison de la sélectivité des composés complexant des ions mercuriques Hg²⁺ utilisés pour sa fabrication.

### Exemple 2 :

Dans cet exemple, on montre que lorsque l'un des composés complexant les ions mercuriques de formules 1, 2 et 3 suivantes : 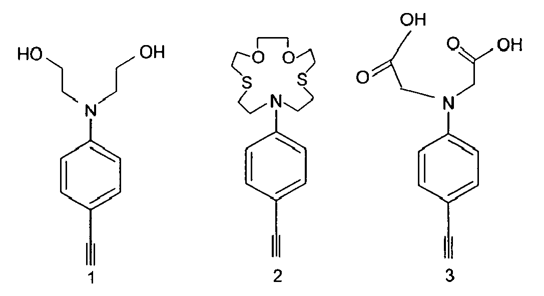 est simplement lié par des liaisons covalentes ou autres, et non par greffage, l'appareil de détection et/ou de quantification des ions Hg²⁺ perd sa sensibilité aux ions Hg²⁺ en moins de 3 mois, alors que lorsque ces mêmes composés sont greffés comme décrit à l'exemple 1, au bout de 3 mois, l'appareil de détection et/ou de quantification des ions Hg²⁺ selon l'invention conserve toute sa sensibilité.

Pour cela, on a déposé sur les mêmes dispositifs qu'à l'exemple 1 les composés de formules 1, 2 et 3, respectivement, et on a mesuré la variation relative de la conductance |Δg/g| après fabrication des dispositifs et après 1 mois, 2 mois et 3 mois.

Au bout de 3 mois, les dispositifs ne détectent plus les ions Hg²⁺.

En parallèle des dispositifs selon l'invention dans lesquels les composés de formules 1, 2 et 3, respectivement, ont été greffés, comme à l'exemple 1, ont été également testés juste après leur fabrication puis après 1, 2 et 3 mois. Au bout de 3 mois, ces dispositifs permettent toujours de détecter et/ou quantifier les ions Hg²⁺ avec la même sensibilité que juste après leur fabrication.

### Exemple 3 :

Dans cet exemple, on montre l'effet de synergie obtenu en greffant deux composés complexant les ions Hg²⁺ sur le même dispositif.

Pour cela, on a préparé, comme à l'exemple 1, un dispositif dans lequel seul le composé de formule 1 était greffé.

Pour cela, la N,N-di(2-hydroxyéthyl)-4-éthynylaniline (1) a été greffé sur le dispositif de test par hydrosilylation thermique. Le dispositif a été nettoyé à l'aide d'une solution piranha puis traité avec une solution de HF 1%. Le dispositif activé est chauffé à reflux pendant 2 heures dans une solution à 0,5 mM du récepteur (1) dans le mesitylène. Le dispositif est ensuite rincé au dichlorométhane.

Le dispositif de test est trempé dans une solution contenant des ions Hg²⁺ à 1 mmol.l⁻¹ puis rincé à l'eau déionisée. Le dispositif est ensuite séché à l'air pendant 5 min. La complexation des ions Hg²⁺ entraine une modification de la conductance du dispositif. Une variation relative de la conductance |Δg/g| supérieure à 5% a été mesurée mais inférieure à 10%.

Puis, on a préparé, comme à l'exemple 1, un dispositif dans lequel seul le composé de formule 3 était greffé.

Pour cela, la N,N-di(2-carboxyéthyl)-4-éthynylaniline (1) a été greffé sur le dispositif de test par hydrosilylation thermique. Le dispositif a été nettoyé à l'aide d'une solution piranha puis traité avec une solution de HF 1%. Le dispositif activé est chauffé à reflux pendant 2 heures dans une solution à 0,5 mM du récepteur (1) dans le mesitylène. Le dispositif est ensuite rincé au dichlorométhane.

Le dispositif de test est trempé dans une solution contenant des ions Hg²⁺ à 1 mmol.l⁻¹ puis rincé à l'eau déionisée. Le dispositif est ensuite séché à l'air pendant 5 min. La complexation des ions Hg²⁺ entraine une modification de la conductance du dispositif. Une variation relative de la conductance |Δg/g| supérieure à 5% a été mesurée mais inférieure à 10%.

On a ensuite préparé, comme à l'exemple 1, un dispositif dans lequel les composés de formules 1 et 2 ont été greffés.

Pour cela, la N,N-di(2-hydroxyéthyl)-4-éthynylaniline (1) et la molécule 2 ont été greffés sur le dispositif de test par hydrosilylation thermique. Le dispositif a été nettoyé à l'aide d'une solution piranha puis traité avec une solution de HF 1%. Le dispositif activé est chauffé à reflux pendant 2 heures dans une solution à 0,5 mM du récepteur 1 et 2 dans le mesitylène. Le dispositif est ensuite rincé au dichlorométhane.

Le dispositif de test est trempé dans une solution contenant des ions Hg²⁺ à 1 mmol.l⁻¹ puis rincé à l'eau déionisée. Le dispositif est ensuite séché à l'air pendant 5 min. La complexation des ions Hg²⁺ entraine une modification de la conductance du dispositif. Une variation relative de la conductance |Δg/g| supérieure à 30% a été mesurée. On observe un effet de synergie lorsque ces deux récepteurs sont greffés conjointement.

Puis on a préparé, comme à l'exemple 1, un dispositif dans lequel les composés de formules 2 et 3 ont été greffés.

Pour cela, la N,N-di(2-hydroxyéthyl)-4-éthynylaniline (3) et la molécule (2) ont été greffés sur le dispositif de test par hydrosilylation thermique. Le dispositif a été nettoyé à l'aide d'une solution piranha puis traité avec une solution de HF 1%. Le dispositif activé est chauffé à reflux pendant 2 heures dans une solution à 0,5 mM du récepteur (3) et (2) dans le mesitylène. Le dispositif est ensuite rincé au dichlorométhane.

Le dispositif de test est trempé dans une solution contenant des ions Hg²⁺ à 1 mmol.l⁻¹ puis rincé à l'eau déionisée. Le dispositif est ensuite séché à l'air pendant 5 min. La complexation des ions Hg²⁺ entraine une modification de la conductance du dispositif. Une variation relative de la conductance |Δg/g| supérieure à 20% a été mesurée. On observe un effet de synergie lorsque ces deux récepteurs sont greffés conjointement.

L'appareil de détection et/ou de quantification des ions Hg²⁺ selon l'invention est donc très sensible.

## Revendications

1. Appareil de détection et/ou de quantification des ions mercuriques Hg²⁺ du type comprenant :
- un dispositif électrique comprenant deux électrodes et un substrat comprenant au moins une surface en un matériau semi-conducteur organique ou inorganique, les électrodes étant en contact électrique avec le matériau semi-conducteur organique ou inorganique, et
- un dispositif de mesure de la variation du courant de conduction entre les deux électrodes,
**caractérisé en ce qu'**au moins un composé complexant les ions mercuriques Hg²⁺ choisi parmi un composé dithia dioxa-monoazaether couronne, une N,N'(hydroxyéthyl) amine, une N,N'(carboxyléthyl) amine et les mélanges de deux au moins de ces composés, est greffé au matériau semi-conducteur ou à une électrode du dispositif électrique.

2. Appareil de détection et/ou de quantification des ions mercuriques Hg²⁺ selon la revendication 1 **caractérisé en ce que** le substrat du dispositif électrique est entièrement constitué d'un matériau semi-conducteur organique ou inorganique.

3. Appareil de détection et/ou de quantification des ions mercuriques Hg²⁺ selon la revendication 1 **caractérisé en ce que** le substrat du dispositif électrique comprend un support en silice (SiO₂) recouvert d'un matériau semi-conducteur.

4. Appareil de détection et/ou de quantification des ions mercuriques Hg²⁺ selon l'une quelconque des revendications précédentes **caractérisé en ce que** le matériau semi-conducteur du substrat du dispositif électrique est choisi parmi un matériau à base de carbone, de silicium, de germanium, de zinc, de gallium, d'indium, de cadmium, ou de mélanges de deux au moins de ceux-ci.

5. Appareil de détection et/ou de quantification des ions mercuriques Hg²⁺ selon la revendication 4 **caractérisé en ce que** le matériau semi-conducteur du substrat du dispositif électrique est choisi parmi les nanofils et/ou les nanotubes de carbone, de silicium, de germanium, d'alliages de silicium et de germanium, et les mélanges de ceux-ci.

6. Appareil de détection et/ou de quantification des ions mercuriques Hg²⁺ selon l'une quelconque des revendications 1 à 3 **caractérisé en ce que** le matériau semi-conducteur du substrat du dispositif électrique est choisi parmi un matériau à base de thiophène tel que le quaterthiophène et ses dérivés tels que le P3HT (poly-3-hexylthiophène) ; de pyrrole tel que le polypyrrole ; d'arylamines telles que la triphénylamine et leurs dérivés tels que la polytriarylamine ; de macrocycles hétérocycliques tels que les porphyrines et les tétraphénylporphyrines et les phtalocyanines et leurs dérivés tels que la tétraphénylporphyrine de cuivre et la phatocyanine de nickel ; d'acènes polycycliques aromatiques tels que les pentacènes et leurs dérivés tels que le tri-isopropylsilyl-pentacène ; d'arylènes tels que le pyrène, et ses dérivés tels que le dicyanopérylènediimide (PDI-CN₂).

7. Appareil de détection et/ou de quantification des ions mercuriques Hg²⁺ selon l'une quelconque des revendications 1 à 3 **caractérisé en ce que** le matériau semi-conducteur du substrat du dispositif électrique est choisi parmi le poly-3-hexylthiophène, la polytriarylamine, l'anthracène, le pentacène, le perylène, le polyparaphénylène, le polyparaphénylènevinylène, le polyfluorène, et leurs mélanges.

8. Appareil de détection et/ou de quantification des ions mercuriques Hg²⁺ selon l'une quelconque des revendications précédentes **caractérisé en ce qu'**au moins l'une des deux électrodes du dispositif électrique est en un matériau semi-conducteur choisi parmi des nanotubes de carbone et du poly(3,4-éthylène dioxythiophène)/poly(styrène sulfonate).

9. Appareil de détection et/ou de quantification des ions mercuriques Hg²⁺ selon l'une quelconque des revendications 1 et 3 à 7 **caractérisé en ce que** le substrat est constitué d'un support en silice recouvert d'une couche de silicium dans laquelle sont gravés des nanofils de silicium.

10. Appareil de détection et/ou de quantification des ions mercuriques Hg²⁺ selon l'une quelconque des revendications 1 à 9 **caractérisé en ce que** le au moins un composé complexant les ions mercuriques Hg²⁺ est greffé au matériau semi-conducteur du substrat du dispositif électrique.

11. Appareil de détection et/ou de quantification des ions mercuriques Hg²⁺ selon l'une quelconque des revendications 1 à 9 **caractérisé en ce que** le au moins un composé complexant les ions mercuriques Hg²⁺ est greffé à l'une des électrodes du dispositif électrique.

12. Appareil de détection et/ou de quantification des ions mercuriques Hg²⁺ selon la revendication 10 **caractérisé en ce que** le matériau semi-conducteur du substrat du dispositif électrique est du silicium et **en ce que** le au moins un composé complexant les ions mercuriques Hg²⁺ est greffé à ce matériau semi-conducteur par un groupement de greffage choisi parmi un groupement alcyne, un groupement alcène, un groupement diazonium ou un groupement triazène.

13. Appareil de détection et/ou de quantification des ions mercuriques Hg²⁺ selon la revendication 10 **caractérisé en ce que** le matériau semi-conducteur du substrat du dispositif électrique est du silicium recouvert d'une couche d'oxyde et **en ce que** le au moins un composé complexant les ions mercuriques Hg²⁺ est greffé à ce matériau semi-conducteur par un groupement de greffage choisi parmi un groupement trialcoxysilane ou un groupement trihalogénosilane, de préférence, un groupement triméthoxysilane ou un groupement trichlorosilane.

14. Appareil de détection et/ou de quantification des ions mercuriques Hg²⁺ selon la revendication 10 **caractérisé en ce que** le matériau semi-conducteur du substrat du dispositif électrique est constitué de nanofils et/ou nanotubes de carbone et **en ce que** le au moins un composé complexant les ions mercuriques Hg²⁺ est greffé à ce matériau semi-conducteur par un groupement choisi parmi un groupement diazonium, un groupement triazène, un groupement précurseur radicalaire, un groupement aromatique ou hétéroaromatique tel qu'un groupement pyrène, anthracène ou porphyrine, ou un groupement amine, ou un groupement alcool.

15. Appareil de détection et/ou de quantification des ions mercuriques Hg²⁺ selon la revendication 11 **caractérisé en ce que** ladite électrode à laquelle est greffé le composé complexant les ions mercuriques Hg²⁺ est en or et **en ce que** le au moins un composé complexant les ions mercuriques Hg²⁺ est greffé à cette électrode par un groupement de greffage choisi parmi un groupement thiol, un groupement thiol protégé, de préférence un groupement thio acétate, ou un groupement dissulfure.

16. Appareil de détection et/ou de quantification des ions mercuriques Hg²⁺ selon l'une quelconque des revendications précédentes **caractérisé en ce que** le au moins un composé complexant les ions mercuriques Hg²⁺ est le dithia dioxa-monoazaether couronne.

17. Procédé de détection et/ou de quantification des ions mercuriques Hg²⁺ **caractérisé en ce qu'**il comprend les étapes suivantes :
a) mise en contact de l'échantillon susceptible de contenir des ions mercuriques Hg²⁺ avec le au moins un composé complexant les ions mercuriques Hg²⁺ de l'appareil de détection et/ou de quantification des ions mercuriques Hg²⁺ selon l'une quelconque des revendications 1 à 16, et
b) lecture de la variation du courant de conduction mesurée par le dispositif de mesure de l'appareil de détection et/ou de quantification des ions mercuriques Hg²⁺ selon l'une quelconque des revendications 1 à 16.
